# DEMANDE DE BREVET EUROPEEN

(11) **EP 1 698 601 A2**
(43) Date de publication de la demande: **06.09.2006**
(21) Numéro de dépôt: 06290358.8
(22) Date de dépôt: 02.03.2006
(51) Int. Cl.: C04B 7/26

(54) **Ciment composé avec de la cendre LFC et beton contenant ladite cendre**

(30) Priorité: 03.03.2005 FR 0502158
(71) Demandeur: Electricité de France, 75008 Paris (FR)
(72) Inventeur: Ayrinhac, Fabien, 12000 Rodez (FR); Bursi, Jean-Michel, 69250 Curis Au Mont D'Or (FR); Hochard, François-Gérald, 69006 Lyon (FR); Olivier, Joël, 13100 Aix en Provence (FR); Valon, Robert, 13090 Aix en Provence (FR); Carles-Gibergues, André, 31320 Vigoulet-Auzil (FR); Clastres, Pierre, 31400 Toulouse (FR); Martin, François, 31570 Sainte Foy D'Aigrefeuille (FR)
(74) Mandataire: Pöpping, Barbara

(57) **Abrégé**

L'invention concerne un ciment composé qui comporte au moins un ciment ou clinker et au moins une cendre volante LFC, ladite cendre étant principalement sous forme de quartz, d'argile déshydroxylée, de chaux vive et d'anhydrite et telle que, en % masse sur sa masse totale,:
- les SiO₂, Al₂O₃, Fe₂O₃ et CaO représentent au moins 60% en masse de la masse totale de la cendre volante LFC,
- le SO₃ est de 3 à 40%, le CaO est de 0 à 60%, le SiO₂ est de 4 à 60%, l'Al₂O₃ est de 1 à 35%, et le Fe₂O₃ est de 0 à 15%,
la teneur en SO₃ du ciment composé étant au plus de 5% en masse dudit ciment composé.

L'invention concerne aussi un béton comprenant du ciment et de ladite cendre volante LFC, la teneur en SO₃ apportés par le ciment et les additions, dont la cendre volante LFC, étant inférieure ou égale à 5 % en masse sur la masse de ces constituants.

## Description

L'invention concerne un ciment composé avec de la cendre LFC, ou « ciment composé LFC », ainsi qu'un béton comprenant une telle cendre volante LFC.

Par « cendre volante LFC », on entend selon l'invention une cendre volante principalement issue de chaudière de type L.F.C. (pour Lit Fluidisé Circulant).

Par la suite, nous appellerons « ciment composé » (pour « blended cement » en anglais) un ciment comprenant un ajout minéral, par exemple de la cendre volante, « ciment composé LFC » un ciment composé comprenant de la cendre volante LFC, une cendre volante, et « béton composé LFC » un béton comprenant de la cendre volante LFC. Par « cendre volante », on entend selon l'invention une cendre issue d'un procédé de combustion d'au moins un combustible, en général par combustion en chaudière de centrale thermique.

Traditionnellement, les voies de valorisation des cendres volantes de chaudières de centrales thermiques classiques à charbon pulvérisé (CP) sont associées à la production de ciment et de béton. Les cendres utilisées de la sorte réduisent le coût de production de ciment et du béton, tout en maintenant voire améliorant certaines caractéristiques techniques telle que la résistance mécanique.

Le système de désulfuration des chaudières à lit fluidisé circulant permet de réduire le rejet d'oxyde de soufre gazeux dans l'atmosphère. Une des caractéristiques de ce système est qu'il permet d'utiliser un grand nombre de combustibles aux qualités variables, et en particulier des combustibles soufrés qui n'ont pas beaucoup d'autres voies de valorisation. Ces combustibles soufrés impliquent le plus souvent la formation d'une cendre volante très particulière, à savoir une cendre volante LFC sulfo-calcique (i.e. comprend un mélange de SO₃ et de CaO).

La composition chimique de la cendre volante LFC est généralement telle qu'elle est principalement constituée d'un mélange de SiO₂, Al₂O₃, CaO et SO₃. Sa minéralogie est généralement particulière, en ce que cette cendre contient de la chaux vive CaO et de l'anhydrite ou sulfate de calcium CaSO₄, ainsi que de la silice et de l'alumine sous forme cristallines principalement d'argiles déshydroxylées (la plupart du temps de la métakaolinite 2SiO₂.Al₂O₃) et de quartz (SiO₂). La présence de métakaolinite dans la cendre peut être avantageusement vérifiée par le biais d'une caractérisation par diffraction des rayons X sur le combustible. La dimension moyenne des particules constituant la cendre volante LFC varie généralement de 5 à 30 micromètres.

Jusqu'ici, la cendre volante LFC n'a pas pu être utilisée pour confectionner un ciment ou un béton. En effet, d'une part, les textes réglementaires et les normes en vigueur l'excluent, parce qu'elle est issue d'un procédé non traditionnel, et que sa composition chimique est généralement trop sulfo-calcique, et d'autre part la plupart des compositions chimiques sulfo-calciques peuvent conduire à des gonflements dans l'eau. Ainsi, le principal obstacle pour valoriser ces cendres dans la filière du génie civil (principalement ciment et béton) concerne le gonflement dans l'eau que les cendres sulfo-calciques provoquent lorsqu'elles sont mélangées au ciment, ce qui rend la confection d'un liant hydraulique à base de ciment et de cendre volante LFC délicate. Aussi, les voies de valorisations actuelles pour cette cendre volante LFC sont le plus souvent des utilisations telles que le comblement de cavités ou les techniques routières.

Les cendres volantes classiques, issues de combustibles peu soufrés, telles les cendres issues de chaudières C.P. (i.e. à charbon pulvérisé), sont quant à elles compatibles avec le ciment et permettent la confection de ciment composé et de béton.

L'invention permet de résoudre les problèmes de l'art antérieur, en ce qu'elle permet de réaliser, de façon surprenante, à la fois un ciment composé LFC et un béton composé LFC, sans poser de problème de gonflement, ni de problème de tenue mécanique dudit ciment ou dudit béton.

Ainsi, l'invention concerne un ciment composé comprenant au moins une cendre volante issue de chaudière à lit fluidisé circulant (ou LFC), et au moins un ciment ou clinker, ledit ciment composé étant appelé ciment composé LFC, ladite cendre volante LFC étant telle que :
- La somme des oxydes SiO₂, Al₂O₃, Fe₂O₃ et CaO représente au moins 60% en masse de la masse totale de la cendre volante LFC,
- le pourcentage massique de SO₃ est compris entre 3% et 40%, de la masse totale de la cendre volante LFC, le pourcentage massique de CaO est compris entre 5% et 60%, de la masse totale de la cendre volante LFC, le pourcentage massique de SiO₂ est compris entre 4 et 60% de la masse totale de la cendre volante LFC, le pourcentage massique d'Al₂O₃ est compris entre 1 et 35% de la masse totale de la cendre volante LFC, et le pourcentage massique de Fe₂O₃ est compris entre 0 et 15% de la masse totale de la cendre volante LFC,
- le SiO₂ et l'Al₂O₃ sont principalement sous la forme de quartz (SiO₂) et d'argiles déshydroxylées, et le CaO et le SO₃ sont principalement sous la forme de chaux vive (CaO) et d'anhydrite (CaSO₄),
et la teneur en SO₃ du ciment composé LFC est inférieure ou égale à 5% en masse sur la masse dudit ciment composé LFC.

Le ciment est généralement un ciment Portland le plus souvent spécifié selon la norme NF EN 197-1, ainsi qu'il est connu de l'homme du métier. De préférence, un tel ciment est un ciment spécifié « ciment pour travaux en eaux à hautes teneurs en sulfates », selon la norme NF XP P 15-319 (ou ciment ES). Avantageusement, le ciment selon l'invention a une faible teneur en C₃A (phase minérale du ciment, aluminate tricalcique de formule 3 CaO.Al₂O₃) . Par « faible teneur », on entend généralement moins de 5% en masse par rapport à la masse dudit ciment.

Le ciment peut également être remplacé par du clinker, exempt de sulfate de calcium. Dans ce cas, le sulfate de calcium nécessaire à la régulation de la prise du liant hydraulique est apporté par la cendre LFC.

A condition de respecter une teneur maximale en SO₃ de 5% du ciment composé LFC selon l'invention, ledit ciment peut être présent dans le ciment composé LFC à proportion d'au moins 50%, de préférence d'au moins 65%, de façon encore plus préférée d'au moins 75%, et le plus souvent d'au plus 95%, en masse sur la masse du ciment composé LFC. Dans un mode de réalisation, le ciment composé LFC comporte de 75 à 95% en masse dudit ciment et de 5 à 25% en masse de ladite cendre volante LFC.

La cendre volante LFC selon l'invention est généralement le produit de la désulfuration des fumées de combustion par injection de calcaire, ainsi que des résidus non volatils du combustible, à une température généralement inférieure à 900 °C. Une telle température est très inférieure à celle des chaudières C.P., dont la température de fonctionnement est généralement d'au moins 1200°C.

La cendre volante LFC selon l'invention constitue, selon la nomenclature en vigueur, un ajout audit ciment.

Avantageusement, en terme de réactivité, ladite cendre volante LFC possède des propriétés hydrauliques, de par sa teneur en SO₃ et CaO, et pouzzolaniques, grâce aux argiles déshydroxylées. La forme de la cendre volante LFC selon l'invention est très différente de celle des cendres volantes normalisées non LFC.

En effet, la cendre volante LFC selon l'invention, observée au microscope électronique à balayage, est généralement composée d'amas de plaquettes et d'autres formes très variées. Les cendres volantes normalisées non LFC, elles, se présentent généralement sous la forme de grains sphériques, qui sont majoritairement constitués de verre issu d'une fusion à température supérieure ou égale à 1000°C des espèces minérales contenues dans le combustible de la chaudière. Les espèces différentes du verre présentes dans ces cendres volantes normalisées non LFC sont généralement le quartz, la mullite, et l'hématite.

La surface spécifique Blaine de ladite cendre volante LFC est généralement de 5000 à 11000 cm²/g, la densité de ladite cendre volante LFC étant généralement de 2,3 à 2,7 g/cm³, de préférence autour de 2,5 g/cm³. Cette surface spécifique, définie dans la norme NF EN 196-6, est supérieure à celle des cendres silico-alumineuses CP, pour lesquelles elle est généralement autour de 3000 cm²/g.

Selon un mode de réalisation du procédé selon l'invention, les argiles déshydroxylées sont en majeure partie sous forme de métakaolinite (2 SiO₂. Al₂O₃).

Le ciment composé LFC selon l'invention est généralement fabriqué par tout procédé connu de l'homme du métier, comme l'est l'ajout de toute autre addition minérale au ciment tel que la cendre volante CP. Par exemple, la cendre peut être ajoutée au ciment après son broyage par un cimentier.

Selon un mode de réalisation de l'invention, ledit ciment composé LFC comprend en outre une cendre volante non sulfo-calcique, issue ou non de LFC, la teneur en SO₃ du ciment composé LFC étant inférieure ou égal à 5% en masse dudit ciment composé LFC.

Ladite cendre volante non sulfo-calcique peut être issue de LFC. Dans ce cas, elle est généralement telle que le pourcentage massique de SO₃ est inférieur ou égal à 15% de la masse totale de ladite cendre volante non sulfo-calcique. De préférence, elle est aussi telle que le pourcentage massique de CaO est inférieur ou égal à 30% de la masse totale de la cendre volante non sulfo-calcique, le pourcentage massique de SiO₂ est supérieur ou égal à 25% de la masse totale de la cendre volante non sulfo-calcique, le pourcentage massique d'Al₂O₃ est supérieur ou égal à 15% de la masse totale de la cendre volante non sulfo-calcique.

Ladite cendre volante non sulfo-calcique peut aussi être siliceuse telle que la cendre volante (V) décrite dans la norme NF EN 197-1. Dans ce cas, elle est généralement essentiellement constituée de silice (SiO₂) et d'alumine (Al₂O₃), le restant contenant de l'oxyde de fer (Fe₂O₃) et d'autres composants.

L'invention concerne aussi un béton comprenant au moins de l'eau, des granulats, éventuellement au moins un adjuvant, au moins une addition minérale dont au moins une cendre volante LFC (telle que décrite précédemment selon l'invention en tant que composant du ciment composé LFC) et éventuellement une cendre volante non sulfo-calcique, issue ou non de LFC, et au moins un ciment ou clinker, de préférence un ciment spécifié ES,
ledit béton étant tel que la teneur en SO₃ apportés par le ciment et la ou les additions (dont la cendre volante LFC) est inférieure ou égale à 5% en masse sur la masse de ces constituants.

Un tel béton est un « béton composé LFC ».

Selon la nomenclature en vigueur, la cendre volante LFC selon l'invention constitue une addition dudit béton composé LFC selon l'invention, et l'ensemble du ciment et des additions, dont ladite cendre, constitue un liant dudit béton composé LFC selon l'invention. Par « granulats », on entend généralement sable et/ou gravillons.

Le béton composé LFC selon l'invention est généralement réalisé par tout procédé connu de l'homme du métier, ainsi qu'il est déjà réalisé à partir de cendre volante CP.

Les sources de granulats, d'adjuvant(s), d'addition (s) et de ciment (s) pour le béton composé LFC selon l'invention sont telles que connues de l'homme du métier. Un adjuvant est par exemple un plastifiant - réducteur d'eau. Une addition qui n'est pas une cendre peut par exemple être un laitier granulé de haut fourneau.

### Exemples

Les exemples suivant servent à illustrer l'invention sans pour autant en limiter la portée. Ils ont été réalisés sur mortier dans le but de prévoir le comportement du ciment composé et du béton. Les mortiers ont été confectionnés selon la norme NF EN 196-1 en vigueur.

Pour l'ensemble des exemples, nous avons considéré qu'un gonflement maximal sur mortier de 500µm/m à 90 jours, mesuré à l'aide d'un rétractomètre selon la norme NF P 15-433 en vigueur, correspondait à un gonflement acceptable sur béton. Au-dessous de cette valeur, le ciment composé est acceptable pour une utilisation dans le domaine du béton. Au-dessus de cette valeur, le ciment composé est inacceptable pour une utilisation dans le domaine du béton.

### Exemple 1 (comparatif)

Différents ciments composés, mélanges de ciment Portland et de cendre, ont été confectionnés. Pour ce faire, du ciment Portland a été remplacé par de la cendre volante LFC à hauteur de 25%. Le ciment Portland utilisé dans cette étude était un ciment A à forte teneur en C₃A, de composition donnée dans le tableau 1 suivant (en % en masse par rapport à la masse totale du ciment), les 2% restants étant des composants mineurs (S²⁻, Cl⁻, perte au feu, P₂O₅ et non dosé) :

**Tableau 1 Composition chimique du ciment A**

| | **Ciment A** |
|---|---|
| **SiO**_{**2**} | 19,93 |
| **Al**_{**2**}**O**_{**3**} | 5,50 |
| **Fe**_{**2**}**O**_{**3**} | 2,34 |
| **CaO** | 63,89 |
| M**gO** | 2,48 |
| **K**_{**2**}**O** | 0,74 |
| **Na**_{**2**}**O** | 0,10 |
| **SO**_{**3**} | 3,02 |

Le ciment A comprend 10,8 % de C₃A (aluminate de calcium, 3 CaO.Al₂O₃) et 6, 9 % de C₄AF (aluminate de calcium ferrique, 4 CaO.Al₂O₃.Fe₂O₃).

Les cendres utilisées dans les exemples étaient les suivantes:
- une cendre volante d'un charbon international très peu soufré (SO₃ = 6,3%) (Référence SA)
- des cendres volantes sulfo-calciques LFC, issues de combustibles soufrés, la composition chimique de chacune étant telle que leur teneur en SO₃ est supérieure à 15% en masse par rapport à la masse de ladite cendre (Références C1, C2, C3, C4)

La composition chimique de ces cendres C1 à C4 est donnée dans le Tableau 2 suivant, en % masse par rapport à la masse totale de la cendre volante.

**Tableau 2 Composition chimique en oxydes des cendres volantes C1 à C4**

| Références | SA | C1 | C2 | C3 | C4 |
|---|---|---|---|---|---|
| combustible majoritaire | charbon internat ional | 60 % charbon de provence | 90 % charbon de Provenc e | 50% charbon internat ional | 100% coke de pétrole |
| combustible 2 | - | 25 % charbon de Carmaux | 10 % charbon du Gard | 50% coke de pétrole | |
| combustible 3 | - | 15 % schlamms | - | - | - |
| SiO₂ | 37,3% | 24,0% | 21,1% | 14,9% | 6,9% |
| Al₂O₃ | 22,4% | 11,1% | 8,7% | 8,5% | 2,2% |
| CaO | 18,0% | 29,5% | 37,7% | 41,0% | 47,2% |
| SO₃ | 6,3% | 14,7% | 16,7% | 23,6% | 35,2% |
| Total SO₃+CaO+ Al₂O₃+SiO₂ | 84,0% | 79,3% | 84,2% | 88,0% | 91,5% |

La teneur de chacune des cendres C1, C2, C3, C4 en SO₃ était élevée.

Différents mortiers composés, normalisés selon la norme NF EN 196-1, M1, M2, M3 et M4 ont été confectionnés à partir d'un mélange de ciment A, de sable, d'eau et respectivement d'une des cendres C1, C2, C3 et C4. La composition des mortiers est reportée au Tableau 3 suivant, en % masse par rapport à la masse du mortier.

**Tableau 3 Composition des mortiers M1 à M4**

| Référence des mortiers | M1 | M2 | M3 | M4 | MSA | Témoin |
|---|---|---|---|---|---|---|
| Référence de la cendre sulfo-calcique | C1 | C2 | C3 | C4 | SA | - |
| Teneur en SO₃ du ciment composé | 5,9% | 6,4% | 8,2% | 11,1% | 3,9% | - |
| Masse de ciment A | 337,5g | 337,5g | 337,5g | 337,5g | 337,5g | 450g |
| Masse de la cendre sulfo-calcique | 112,5g | 112,5g | 112,5g | 112,5g | 112,5g | 0g |
| Masse de sable | 1350 | 1350g | 1350g | 1350g | 1350g | 1350g |
| Masse d'eau | 225g | 225g | 225g | 225g | 225g | 225g |

Les mortiers ont provoqué les gonflements dans l'eau, mesurés en µm/m, reportés dans le Tableau 4 suivant :

**Tableau 4 Variations dimensionnelles dans l'eau des mortiers M1 à M4**

| Référence des mortiers | M1 | M2 | M3 | M4 | MSA | Témoin |
|---|---|---|---|---|---|---|
| Variations dimensionnelles à 7 jours (µm/m) | 383 | 225 | 256 | 227 | 200 | 23 |
| Variations dimensionnelles à 14 jours (µm/m) | 450 | 444 | 370 | 364 | 222 | 110 |
| Variations dimensionnelles à 28 jours (µm/m) | 493 | 702 | 516 | 472 | 235 | 125 |
| Variations dimensionnelles à 90 jours (µm/m) | 542 | 1614 | 1667 | 1427 | 277 | 155 |

Par suite, ces quatre cendres volantes LFC C1 à C4 ont été considérées comme gonflantes et, de ce fait, non utilisables pour confectionner un ciment composé. On note que le ciment composé de l'art antérieur, à teneur en SO₃ de 4%, qui a donné le mortier MSA, est tout à fait acceptable.

### Exemple 2 (comparatif)

Chacune des quatre cendres C1 à C4 précédentes a été mélangée avec la cendre SA. Ainsi, la teneur en sulfate du ciment composé LFC, obtenu par mélange du ciment A de l'exemple 1 avec l'une des cendres C1 à C4 et la cendre SA, était légèrement supérieure à 5% par rapport à la masse du ciment composé. Ce ciment composé n'était donc pas un ciment composé LFC selon l'invention. La teneur en ciment était toujours égale à 75% en masse du ciment composé, et la teneur en cendres (une des cendres C1 à C4 + la cendre SA) était toujours égale à 25% en masse du ciment composé. Les ciments composés ainsi obtenus comparatifs [ciment + cendre SA + cendre (C1 ou C2 ou C3 ou C4)] ont été mélangés avec de l'eau et du sable, dans un rapport massique eau sur liant égal à 0,5 tel que le préconise la norme NF EN 196-1. Le liant est, selon cette norme, la somme du ciment et des cendres. Les compositions des mortiers composés ainsi obtenus M'1, M'2, M'3 et M'4 sont reportées dans le Tableau 5 suivant, en % masse par rapport à la masse du mortier composé.

**Tableau 5 Composition des mortiers M'1 à M'4**

| Référence des mortiers | M' 1 | M' 2 | M' 3 | M' 4 | Témoin |
|---|---|---|---|---|---|
| Référence de la cendre sulfo-calcique | C1 | C2 | C3 | C4 | - |
| Masse de ciment A | 337,5g | 337,5g | 337,5g | 337,5g | 450g |
| Masse de la cendre SA | 48,94g | 59,85g | 73,80g | 87,19g | 0g |
| Masse de la cendre sulfo-calcique | 63,56g | 52,65g | 38,70g | 25,31g | 0g |
| Teneur en sulfate (SO₃) du ciment composé | 5,0% | 5,1% | 5,3% | 5,3% | - |
| Masse de sable | 1350g | 1350g | 1350g | 1350g | 1350g |
| Masse d'eau | 225g | 225g | 225g | 225g | 225g |

Les gonflements dans l'eau des mortiers M'1, M'2, M'3 et M'4 sont reportés dans le Tableau 6 suivant.

**Tableau 6 Variations dimensionnelles dans l'eau des mortiers M'1 à M'4**

| Référence des mortiers | M'1 | M'2 | M'3 | M'4 | Témoin |
|---|---|---|---|---|---|
| Variations dimensionnelles à l'échéance de 7 jours (en µm/m) | 271 | 208 | 175 | 246 | 23 |
| Variations dimensionnelles à l'échéance de 14 jours (en µm/m) | 348 | 256 | 250 | 279 | 110 |
| Variations dimensionnelles à l'échéance de 28 jours (en µm/m) | 272 | 216 | 291 | 300 | 125 |
| Variations dimensionnelles à l'échéance de 90 jours (en µm/m) | 358 | 192 | 266 | 296 | 155 |

Ces mortiers composés à teneur en SO₃ un peu supérieure à 5% donnent de bons résultats en terme de gonflement. Donc *a fortiori* des mortiers à base de ciment composés LFC selon l'invention, à teneur en sulfate (SO₃) inférieure ou égal à 5%, donnent un gonflement non rédhibitoire pour son usage dans le domaine du génie civil.

Une étude a été réalisée pour connaître l'impact de l'incorporation des cendres dans les ciments composés, en étudiant les performances mécaniques du mortier pour les mortiers composés M'1, M'2, M'3 et M'4.

Les essais mécaniques de résistance à la compression et à la flexion, réalisés selon la norme NF EN 196-1, aux échéances de 28 et 90 jours figurent dans le Tableau 7 suivant.

**Tableau 7 Résistances mécaniques des mortiers M'1 à M'4**

| Référence des mortiers | M'1 | M'2 | M'3 | M'4 | Témoin |
|---|---|---|---|---|---|
| Résistance à la compression à 28 jours (MPa) | 64,2 | 60,3 | - | 67,0 | 65,6 |
| Résistance à la compression à 90 jours (MPa) | 65,9 | 61,6 | 67,3 | 74,9 | 72,2 |
| Résistance à la flexion à 28 jours (MPa) | 8,11 | 7,40 | 4,42 | 8,18 | 7,58 |
| Résistance à la flexion à 90 jours (MPa) | 8,51 | 8,17 | 8,46 | 9,37 | 7,67 |

Les résistances à la compression et flexion des mortiers composés LFC M'1, M'2, M'3 et M'4 étaient peu différentes de celles du mortier témoin, ce qui confirme *a fortiori* la bonne qualité des ciments composés LFC selon l'invention et donc des bétons composés LFC selon l'invention.

### Exemple 3 (comparatif)

Nous avons étudié dans l'exemple 2 des ciments composés qui étaient des mélanges, en % masse, de 75% de ciment Portland et de 25% de cendre volante totale (i.e. LFC + non LFC). Nous allons étudier dans cet exemple 3 l'influence de la variation des gonflements des ciments composés dont les proportions de cendre volante totale et de ciment sont différentes, en fonction de la teneur du SO₃ du ciment composé.

Le ciment était le ciment A de l'exemple 1, et la cendre était un mélange des cendres C4 et SA, dans des proportions qui permettent d'obtenir, selon l'invention, un taux de SO₃ dans le ciment composé au maximum égal à 5% en masse. Le ciment composé était donc un ciment composé LFC selon l'invention.

Les résultats sont présentés dans le tableau 8 suivant, le taux de substitution étant le pourcentage en masse de cendre totale sur la masse totale du ciment composé LFC.

**Tableau 8 Variations dimensionnelles dans l'eau de différents mortiers de ciments composés**

| Teneur en SO₃ | 4,0% (selon l'inventio n) | 5,0% (selon l'inventi on) | 6,0% (compara tif) | 7,9% (compara tif) |
|---|---|---|---|---|
| Taux de substitution | 5% | 10% | 15% | 25% |
| Variations dimensionnelles à 7 jours (µm/m) | 2 | 104 | 202 | 277 |
| Variations dimensionnelles à 14 jours (µm/m) | 42 | 166 | 310 | 404 |
| Variations dimensionnelles à 28 jours (µm/m) | - | 137 | 358 | 675 |
| Variations dimensionnelles à 56 jours (µm/m) | 85 | 225 | 442 | 946 |
| Variations dimensionnelles à 90 jours (µm/m) | 119 | 234 | 471 | 992 |

Nous voyons donc que le taux de substitution du ciment par de la cendre volante LFC selon l'invention, pour réaliser un ciment composé, est un paramètre important. En pratique, les performances peuvent être améliorées en particulier si le taux de ciment est au moins égal à 65% en masse dans le ciment composé.

### Exemple 4 (comparatif)

L'exemple 4 concerne l'étude de l'influence de la nature du ciment Portland dans le ciment composé LFC selon l'invention.

Des essais de gonflement en µm/m ont été réalisés avec trois ciments Portland. Le premier ciment, le ciment A, était celui des exemples précédents 1 à 3, et a été choisi pour son taux de C₃A élevé (10 ,8%). Le deuxième ciment, le ciment B, comportait un taux moyen (7,5%) de C₃A et le troisième ciment, le ciment C, comprenait un taux faible (0,40%) de C₃A. La cendre était un mélange des cendres C4 et SA, dans des proportions qui permettent d'obtenir, selon l'invention, un taux de S03 tel qu'indiqué.

Les compositions chimiques des ciments A, B et C sont reportées dans le tableau 9 suivant, en % masse par rapport à la masse du ciment.

**Tableau 9 Composition chimique et minéralogique des ciments A, B et C utilisés**

| | **ciment A** | **Ciment B** | **ciment C** |
|---|---|---|---|
| **SiO**_{**2**} | 19, 93 | 20,80 | 21,00 |
| **Al**_{**2**}**O**_{**3**} | 5,50 | 4, 60 | 3,16 |
| **Fe**_{**2**}**O**_{**3**} | 2,34 | 2,80 | 4,77 |
| **CaO** | 63,89 | 64,40 | 64,70 |
| **MgO** | 2,48 | 1,40 | 0,65 |
| **K**_{**2**}**O** | 0,74 | 0,85 | 0, 75 |
| **Na**_{**2**}**O** | 0,10 | 0,08 | 0, 19 |
| **SO**_{**3**} | 3,02 | 3, 40 | 2,71 |
| **C**_{**3**}**A** | 10,8 | 7,5 | 0,38 |
| **C**_{**4**}**AF** | 6, 9 | 8, 4 | 14, 6 |

Le ciment C est normalisé « prise mer - eaux sulfatées » (norme prise de mer ou PM, NF P 15-317 en vigueur, et norme eau à haute teneur en sulfates ou ES, NF XP P 15-319 en vigueur).

### Exemple 4a)

Les résultats des gonflements, en fonction du % de SO₃ dans le ciment composé, sont présentés dans les tableaux 10, 11 et 12 suivants, selon le ciment utilisé et dans le cas d'un taux de substitution de 25%.

**Tableau 10 Gonflement dans l'eau au cours du temps ; cas du ciment A (75% Ciment A + 25% cendres (SA + C4))**

| | | | | | | |
|---|---|---|---|---|---|---|
| Teneur en sulfate du ciment composé | 4,8% (I) | 5,5% (I) | 6,3% (C) | 7,9% (C) | 8,8% (C) | 10,2% (C) |
| Variations dimensionnelles à 28 jours (µm/m) | 229 | 300 | 340 | 602 | 788 | 752 |
| Variations dimensionnelles à 56 jours (µm/m) | 173 | 246 | 296 | 921 | 1278 | 1277 |
| Variations dimensionnelles à 90 jours (µm/m) | 175 | 296 | 371 | 1108 | 2234 | 2221 |

| | | | | | | |
|---|---|---|---|---|---|---|
| (I) : Selon l'invention ; (C) : comparatif | | | | | | |

**Tableau 11 Gonflement dans l'eau au cours du temps ; cas du ciment B (75% Ciment B + 25% cendres (SA + C4))**

| Teneur en sulfate du ciment composé | 5,1% (I) | 5,8% (C) | 6,6% (C) | 8,2% (C) | 9,1% (C) | 10,5% (C) |
|---|---|---|---|---|---|---|
| Variations dimensionnelles à 28 jours (µm/m) | 229 | 269 | 319 | 302 | 367 | 400 |
| Variations dimensionnelles à 56 jours (µm/m) | 260 | 331 | 581 | 692 | 667 | 557 |
| Variations dimensionnelles à 90 jours (µm/m) | 238 | 310 | 627 | 1173 | 927 | 779 |

| | | | | | | |
|---|---|---|---|---|---|---|
| (I) : Selon l'invention ; (C) : comparatif | | | | | | |

**Tableau 12 Gonflement dans l'eau au cours du temps ; cas du ciment C (75% Ciment C + 25% cendres (SA + C4))**

| Teneur en sulfate du ciment composé | 4,6% (I) | 5,2% (I) | 6,1% (C) | 7,7% (C) | 8,6% (C) | 10,0% (C) |
|---|---|---|---|---|---|---|
| Variations dimensionnelles à 28 jours (µm/m) | 96 | 175 | 221 | 192 | 160 | 238 |
| Variations dimensionnelles à 56 jours (µm/m) | 138 | 119 | 277 | 306 | 177 | 463 |
| Variations dimensionnelles à 90 jours (µm/m) | 121 | 158 | 235 | 333 | 223 | 352 |

| | | | | | | |
|---|---|---|---|---|---|---|
| (I) : Selon l'invention ; (C) : comparatif | | | | | | |

Ainsi, plus la teneur en C₃A du ciment étudié était faible, plus le gonflement du ciment composé était faible, à teneur en SO₃ sensiblement identique.

### Exemple 4b)

L'étude suivante concerne les variations de gonflement entre ces trois ciments A, B et C, en fonction des différentes teneurs en sulfate des ciments composés, dans le cas d'un taux de cendre de 50% par rapport à la masse de ciment composé. Les résultats obtenus sont présentés au tableau 13 suivant.

**Tableau 13 Comparaison du gonflement à 90 jours des ciments composés (50% de cendre) en fonction de leur teneur en C3A**

| | | | | |
|---|---|---|---|---|
| Teneur en SO₃ du ciment composé | 6,6% | 7,9% | 9,6% | 12,8% |
| Variations dimensionnelles (µm/m) des mélanges 50% (ciment C) + 50% cendre | 608 | 1154 | 1560 | 894 |
| Teneur en SO₃ du ciment composé | 7,6% | 9,0% | 10,6% | 13,8% |
| Variations dimensionnelles (µm/m) des mélanges 50% (ciment B) + 50% cendre | 1390 | 1808 | 3850 | 2333 |
| Teneur en SO₃ du ciment composé | 6,4% | 7,8% | 9,4% | 12,6% |
| Variations dimensionnelles (µm/m) des mélanges 50% (ciment A) + 50% cendre | 710 | 1522 | 4079 | 4056 |

Par conséquent, le choix d'utiliser un ciment à faible teneur en C₃A tel que le ciment C permet de diminuer efficacement le gonflement dans l'eau du mortier composé confectionné à partir de ce ciment et justifie l'utilisation préférentielle d'un ciment spécifié ES.

### Exemple 5 (selon l'invention)

Dans cet exemple 5, un béton composé LFC selon l'invention a été confectionné avec un ciment composé, substitué en partie par de la cendre volante LFC. La teneur en sulfate SO₃ du ciment composé était de 5% en masse par rapport à la masse du ciment composé, ce qui en fait un ciment composé LFC selon l'invention.

**Tableau 14 Composition du ciment composé LFC**

| | Masse des constituants en kg/m³ | % pondéral |
|---|---|---|
| Ciment Portland CEM I 52,5R | 262,50 | 75,00% |
| Cendre volante SA | 75,26 | 21,50% |
| Cendre volante C4 | 12,26 | 3,50% |
| Total | 350,00 | 100% |

A partir de ce ciment composé, un béton composé LFC selon l'invention a été confectionné selon les proportions données dans le tableau 15 suivant:

**Tableau 15 Formulation du béton composé LFC selon l'invention**

| | Masse des constituants en kg/m³ |
|---|---|
| Ciment composé LFC | 350 |
| sable | 820 |
| gravier | 1080 |
| eau | 200 |
| Total | 2450 |

Le tableau 16 suivant indique les résultats qui ont été obtenus en terme de gonflement dans l'eau de ce béton composé LFC selon l'invention:

**Tableau 16 Variations dimensionnelles du béton composé LFC selon l'invention conservé dans l'eau à 20 C**

| Nombre de jours après démoulage | Variations dimensionnelles en µm/m |
|---|---|
| 7 jours | 314 |
| 14 jours | 300 |
| 28 jours | 293 |
| 56 jours | 297 |
| 90 jours | 289 |

Le béton composé LFC selon l'invention présente ainsi un gonflement acceptable.

## Revendications

1. Ciment composé comprenant au moins une cendre volante issue de chaudière à lit fluidisé circulant (ou LFC), et au moins un ciment ou clinker, ledit ciment composé étant appelé ciment composé LFC, ladite cendre volante LFC étant telle que :
• La somme des oxydes SiO₂, Al₂O₃, Fe₂O₃ et CaO représente au moins 60% en masse de la masse totale de la cendre volante LFC,
• le pourcentage massique de SO₃ est compris entre 3% et 40%, de la masse totale de la cendre volante LFC, le pourcentage massique de CaO est compris entre 5% et 60%, de la masse totale de la cendre volante LFC, le pourcentage massique de SiO₂ est compris entre 4 et 60% de la masse totale de la cendre volante LFC, le pourcentage massique d'Al₂O₃ est compris entre 1 et 35% de la masse totale de la cendre volante LFC, et le pourcentage massique de Fe₂O₃ est compris entre 0 et 15% de la masse totale de la cendre volante LFC,
• Le SiO₂ et l'Al₂O₃ sont principalement sous la forme de quartz (SiO₂) et d'argiles déshydroxylées, et le CaO et le SO₃ sont principalement sous la forme de chaux vive (CaO) et d'anhydrite (CaSO₄) ,
et la teneur en SO₃ du ciment composé LFC est inférieure ou égale à 5% en masse sur la masse dudit ciment composé LFC.

2. Ciment composé selon la revendication 1, tel que la surface spécifique Blaine de ladite cendre volante est généralement de 5000 à 11000cm²/g, la densité de ladite cendre volante étant généralement de 2,3 à 2,7 g/cm³, de préférence autour de 2,5 g/cm³.

3. Ciment composé selon l'une des revendications 1 ou 2, tel que le ciment composé LFC comporte de 75 à 95% en masse dudit ciment et de 5 à 25% en masse de ladite cendre volante LFC.

4. Ciment composé selon l'une des revendications 1 à 3, tel que les argiles déshydroxylées sont en majeure partie sous forme de métakaolinite (2 SiO₂. Al₂O₃).

5. Ciment composé selon l'une des revendications 1 à 4, tel que ledit ciment composé comprend en outre une cendre volante non sulfo-calcique, issue ou non de LFC, la teneur en SO₃ du ciment composé LFC étant inférieure ou égal à 5% en masse dudit ciment composé LFC.

6. Ciment composé selon la revendication précédente, tel que ladite cendre volante non sulfo-calcique est telle que le pourcentage massique de SO₃ est inférieur ou égal à 15% de la masse totale de ladite cendre volante non sulfo-calcique, et de préférence le pourcentage massique de CaO est inférieur ou égal à 30% de la masse totale de la cendre volante non sulfo-calcique, le pourcentage massique de SiO₂ est supérieur ou égal à 25% de la masse totale de la cendre volante non sulfo-calcique, le pourcentage massique d'Al₂O₃ est supérieur ou égal à 15% de la masse totale de la cendre volante non sulfo-calcique.

7. Ciment composé selon la revendication 5, tel que ladite cendre volante non sulfo-calcique est essentiellement constituée de silice (SiO₂) et d'alumine (Al₂O₃), le restant contenant de l'oxyde de fer (Fe₂O₃) et d'autres composants.

8. Ciment composé selon l'une des revendications 1 à 7, tel que le ciment est un ciment spécifié « ciment pour travaux en eaux à hautes teneurs en sulfates », selon la norme NF XP P 15-319.

9. Ciment composé selon l'une des revendications 1 à 8, tel que le ciment a une faible teneur en C₃A (aluminate de calcium, 3 CaO.Al₂O₃).

10. Béton comprenant au moins de l'eau, des granulats, éventuellement au moins un adjuvant, au moins une addition minérale dont au moins une cendre volante issue de chaudière à lit fluidisé circulant (ou LFC) et éventuellement une cendre volante non sulfo-calcique, issue ou non de LFC, et au moins un ciment ou clinker, de préférence un ciment spécifié ES,
ledit béton étant tel que la teneur en SO₃ apportés par le ciment et la ou les additions est inférieure ou égale à 5% en masse sur la masse de ces constituants, ladite cendre volante LFC étant telle que :
• La somme des oxydes SiO₂, Al₂O₃, Fe₂O₃ et CaO représente au moins 60% en masse de la masse totale de la cendre volante LFC,
• le pourcentage massique de SO₃ est compris entre 3% et 40%, de la masse totale de la cendre volante LFC, le pourcentage massique de CaO est compris entre 5% et 60%, de la masse totale de la cendre volante LFC, le pourcentage massique de SiO₂ est compris entre 4 et 60% de la masse totale de la cendre volante LFC, le pourcentage massique d'Al₂O₃ est compris entre 1 et 35% de la masse totale de la cendre volante LFC, et le pourcentage massique de Fe₂O₃ est compris entre 0 et 15% de la masse totale de la cendre volante LFC,
• le SiO₂ et l'Al₂O₃ sont principalement sous la forme de quartz (SiO₂) et d'argiles déshydroxylées, et le CaO et le SO₃ sont principalement sous la forme de chaux vive (CaO) et d'anhydrite (CaSO₄) .
